Europäisches Patentamt

European Patent Office

Office européen des brevets

(19)

(11) Publication number : **0 021 605 B2**

# NEW EUROPEAN PATENT SPECIFICATION

(12)

(45) Date of publication of the new patent specification : **02.02.94 Bulletin 94/05**

(51) Int. Cl.[5] : **C08F 210/16,** C08F 4/64, C08F 2/34

(21) Application number : **80301722.7**

(22) Date of filing : **23.05.80**

(54) **High tear strength ethylene-based hydrocarbon polymers, film formed from such polymers, and process for making such polymers.**

The file contains technical information submitted after the application was filed and not included in this specification

(30) Priority : **18.06.79 US 49555**

(43) Date of publication of application : **07.01.81 Bulletin 81/01**

(45) Publication of the grant of the patent : **29.01.86 Bulletin 86/05**

(45) Mention of the opposition decision : **02.02.94 Bulletin 94/05**

(84) Designated Contracting States : **AT BE CH DE FR GB IT LI LU NL SE**

(56) References cited :
**EP-A- 0 010 428
EP-A- 0 020 818
GB-A- 1 485 520
GB-A- 1 532 780
GB-A- 1 543 908
US-A- 3 645 992**

(56) References cited :
**Proceedings of "POLYCON 84", 1984, The Plastic and Rubber Institute, London
Kirk-Othmer Encyclopedia of Chemical Technology, vol. 16, pp. 433, 438, 443-444
Kunststoff-Handbuch "Polyolefine", Band IV, 1969, p. 42**

(73) Proprietor : **UNION CARBIDE CORPORATION
39 Old Ridgebury Road
Danbury Connecticut 06817 (US)**

(72) Inventor : **Fraser, William Allen
10 Bayard Lane
Princeton, New Jersey (US)**
Inventor : **Maraschin, Norma Jean
31 Hughes Road
Somerset, New Jersey (US)**
Inventor : **Karol, Frederick John
Hiland Drive
Belle Mead, New Jersey (US)**
Inventor : **Makai, Alexander John
730 Regency Drive
Charleston, Virginia (US)**

(74) Representative : **Baverstock, Michael George Douglas et al
BOULT, WADE & TENNANT 27 Furnival Street
London, EC4A 1PQ (GB)**

EP 0 021 605 B2

## Description

This invention relates to film grade ethylene-based hydrocarbon copolymers, film made therefrom, and a process for making such copolymers.

U.S.-A-4,076,698 (filed originally March 1, 1956 and issued February 28, 1978) discloses the preparation of film grade hydrocarbon polymers made from ethylene and higher alpha olefins in slurry or solution polymerization systems. This patent teaches that, in order to produce film having optimum mechanical properties (Elmendorf Tear Strength) from ethylene copolymers, it is necessary to copolymerize the ethylene with $C_5$ to $C_8$ comonomers.

U.S.-A-3,645,992 (filed February 15, 1968 and issued February 29, 1972) teaches that within the family of partially crystalline hydrocarbon copolymers of ethylene and various higher alpha monoolefins (e.g., butene-1, hexene-1 and octene-1), the physical properties of such resins depend not only on the molecular weight and molecular weight distribution of the polymer and on the amount and type of higher alpha olefin comonomer incorporated into the copolymer, but also upon the distribution of the comonomer units along and among all the polymer molecules. A clear distinction is made between copolymers in which the comonomer units are distributed randomly along a polymer chain but do not have the same ethylene/comonomer ratio among the polymer molecules (these are termed heterogeneous copolymers) as compared to copolymers in which the comonomer units are distributed randomly along a polymer molecule and have the same ethylene/comonomer ratio among the polymer molecules (these are termed homogeneous copolymers). The patent also teaches that these homogeneous copolymers exhibit better properties in the form of extruded film than heterogeneous copolymers made with the same comonomer and having the same density.

U.S.-A-3,645,992 also teaches that homogeneous terpolymers such as those of ethylene, propylene or butene-1 and octene-1 can be prepared with the therein disclosed vanadium-based Ziegler-type catalyst and process. These homogeneous terpolymers had physical properties nearly equivalent to those of the corresponding homogeneous ethylene/octene-1 copolymers.

EP-A-0 004 647 and 0 006 110 disclose the preparation of ethylene hydrocarbon copolymers in a gas phase process, particularly a fluid bed process, which can be operated at relatively low pressures, of up to about 1000 psi. The copolymers are formed from a major mol percent ($\geqq$90) of ethylene and a minor mol percent ($\leqq$10) of one or more $C_3$ to $C_8$ alpha olefins. These copolymers are heterogeneous and may be used to form film therefrom.

Attempts to make film grade resins having optimum physical properties in the form of copolymers made from ethylene and hexene-1 in the gas phase fluid bed polymerization processes disclosed in these European patent applications however, have encountered problems when $C_5$-$C_8$ comonomers are employed. The polymerization reaction involved is an exothermic reaction. In order to conduct the reaction continuously in a commercially feasible manner it is necessary to recirculate the unreacted monomers and to remove excess heat (of reaction) from the recycled monomers in a heat exchanger. Where $C_5$ to $C_8$ comonomers are used these monomers tend to condense out in the reactor system and lead to (i) the production of sticky or tacky polymers which are difficult to handle and process, (ii) the plugging of the gas distribution plate used in such fluid bed reactors, (iii) the fouling of sensing elements inserted in the reactor system for the purpose of monitoring and controlling the reaction conditions, and (iv) reactor temperature control problems due to heat capacity variations.

$C_2$/$C_4$ copolymers having a density of 910 to 940 kg/m³ (0.91 to 0.94) and a melt index of about 2.0 dg/min when made with the catalysts of these European patent applications (which are also the catalysts used in the present inventions) have, in compression molded film form, Elmendorf tear strength values in the range of 3.94 kg/cm (at 140 kg/m³ density) to 102.4 kg/cm (at 910 kg/m³ density). [10 (at 0.94 density) to 260 (at 0.91 density)]. $C_2$/$C_6$ copolymers having a density of 910 to 940 kg/m³ (0.91 to 0.94) and a melt index of about 2.0 dg/min when made with the catalysts of these European patent applications (which are also the catalysts used in the present invention) will have, in compression molded film form, Elmendorf tear strength values in the range of from 9.8 kg/cm (at 940 kg/m³ density) to 197 kg/cm (at 910 kg/m³ density) [25 (at 0.94 density) to 500 (at 0.91 density)]. Based on these data (and the prior art noted above) it would be expected that $C_2$/$C_4$ /$C_6$ heterogeneous terpolymers (where $C_4$ content=$C_6$ content) having a density of 910 to 940 kg/m³ (0.91 to 0.94) and a given melt index, when made with the same catalysts, would have poor physical properties and/or Elmendorf tear strength values lying midway between the Elmendorf tear strength values of such $C_2$/$C_4$ and the $C_2$/$C_6$ copolymers.

It has now been unexpectedly found that copolymers formed from ethylene, and at least one of propylene and butene-1 and at least one $C_5$-$C_8$ comonomer with the catalyst systems and process of the present invention, are heterogeneous copolymers, and in compression molded film form exhibit intrinsic Elmendorf tear strengths which are nearly equivalent to that of the corresponding copolymer of ethylene and one (only) of

the $C_5$ to $C_8$ comonomer made with the same catalyst.

The heterogeneous nature of the polymers of the present invention is demonstrated by their melting points and by polymer fractionation tests.

It has now been unexpectedly found that film having optimum mechanical properties can be prepared from heterogeneous ethylene hydrocarbon copolymers containing $C_3$-$C_4$ comonomers, if such copolymers are also prepared with a relatively small amount of $C_5$-$C_8$ comonomers using the catalysts of the present invention, as described below, and that such copolymers can be prepared in gas phase processes employing recycled unreacted comonomers if the polymerization process of the present invention, as described below, is employed to prepare such polymers.

In accordance with the present invention there is provided an ethylene-based hydrocarbon polymer comprising ethylene, a $C_a$ monomer and a $C_b$ monomer. wherein the $C_a$ monomer is propylene or butene-1 or a mixture thereof, and the $C_b$ monomer is

one or more $C_5$ to $C_8$ alpha monoolefins which contain no branching closer than the fourth carbon atom, wherein:

the molar ratio in the polymer of

$$\frac{C_a}{C_2}$$

is from 0.006 to 0.09 and the molar ratio of

$$\frac{C_b}{C_2}$$

is from 0.003 to 0.07, and the branch chain factor is from 0.2 to 0.8, and wherein:

the polymer is heterogeneous and has a density of from 910 to 940 kg/m³, n-hexane extractables content at 50°C of less than about 5.5 weight percent, melt index of from 0.5 to 5.0 dg/min,

$M_w/M_n$ of from 2.7 to 4.3,

melt flow ratio of from 22 to 36, bulk density of 224 to 497 kg/m³ (14 to 31 pounds per cubic foot) and an average particle size of 0.127 mm to 1.78 mm (0.005 to 0.07 inches).

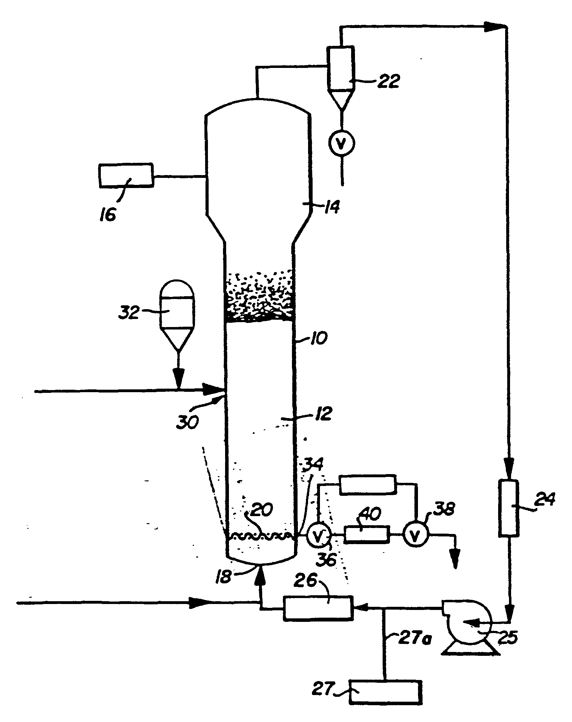

The accompanying drawing shows a gas phase fluid bed reactor system in which the copolymers of the present invention may be prepared.

## The Ethylene copolymers

The ethylene copolymers of the present invention are interpolymers or copolymers of the monomers $C_2$, $C_a$ and $C_b$, wherein $C_2$ is ethylene, $C_a$ is selected from propylene, butene-1 and mixtures thereof, and $C_b$ is selected from one or more of the $C_5$ to $C_8$ alpha monoolefins which contain no branching closer than the fourth carbon atom. The $C_5$ to $C_8$ monomers include pentene-1, 4-methyl pentene-1, hexene-1, heptene-1 and octene-1. These polymers are heterogeneous.

The $C_2$, $C_a$ and $C_b$ monomer units are believed to be randomly distributed along the polymer chain and do not have the same ethylene/comonomer ratio among the polymer molecules. The molar ratio of $C_a/C_2$ monomer units in the polymer mass is 0.006 to 0.09. The molar ratio of $C_b/C_2$ monomer units in the polymer mass is 0.003 to 0.07. In addition, the $C_a$ and $C_b$ monomers are also used in such amounts as to provide a Branch Chain Factor value of 0.1 to 0.9 and preferably of 0.2 to 0.8, where the

$$\text{Branch chain factor} = \frac{\text{number of carbon branches of } C_3 \text{ to } C_6 \text{ length in polymer}}{\text{total number of carbon branches (of } C_1 \text{ to } C_6 \text{ length) in polymer.}}$$

The copolymers have a density of 910 to 940 kg/m³ (0.91 to 0.94) and preferably of 915 to 930 kg/m³ (0.915 to 0.930 grams per cubic centimeter),

a melt flow ratio of $\geq$22 to $\leq$36 and preferably of about $\geq$25 to $\leq$32, and

a melt index of 0.5 to 5.0, and preferably of 0.8 to 4.0. decigrams per minute.

In compression molded film form, copolymers having a density of about 920 kg/m³ (0.920) have an intrinsic (Elmendof) tear strength of 39.4 to 315 kg/cm (100 to 800). In blown film form these copolymers have a Elmendorf tear strength of 23.6 to 236 kg/cm (60 to 600 grams/mil).

The melt flow ratio value is another means of indicating the molecular weight distribution of a polymer. The melt flow ratio (MFR) range of $\geq$22 to $\leq$36 thus corresponds to a $M_w/M_n$ value range of 2.7 to 4.3 and the MFR range of $\geq$25 to $\leq$32 corresponds to a $M_w/M_n$ range of 2.8 to 3.8.

The melt index of a copolymer is a reflection of its molecular weight. Polymers having a relatively high molecular weight, have a relatively low melt index. The melt index of the copolymers which are made in the process of the present invention is a function of a combination of the polymerization temperature of the reaction, the density of the copolymer and the hydrogen/monomer ratio in the reaction system. Thus, the melt index is raised by increasing the polymerization temperature and/or by decreasing the density of the polymer and/or by increasing the hydrogen/monomer ratio. In addition to hydrogen, other chain transfer agents such as dialkyl zinc compounds may also be used to further increase the melt index of the copolymers.

The copolymers of the present invention have an unsaturated group content of $\leq 1$, and usually of $\geq 0.1$ to $\leq 0.6$, C=C/1000 carbon atoms.

The copolymers have a n-hexane extractables content (at 50°C.) of less than about 5.5, and preferably, of less than about 4.0 weight percent.

The copolymers when made in the process of the present invention have a residual catalyst content, in terms of parts per million of titanium metal, of the order of >0 to $\leq 20$ parts per million, (ppm) at a productivity level of $\geq 50,000$ and of the order of >0 to $\leq 10$ ppm at a productivity level of $\geq 100,000$ and of the order of >0 to $\leq 3$ parts per million at a productivity level of $\geq 300,000$. In terms of Cl, Br or I residues, the copolymers of the present invention have a Cl, Br or I residue content which depends upon the Cl, Br or content of the catalyst precursor. From the Ti to Cl, Br or I ratio in the initial catalyst precursor, it is possible to calculate Cl, Br, or I residues from knowledge of the productivity level based on titanium residue only. For many of the copolymers of the present invention made only with Cl containing components of the catalyst system (Cl/Ti=7), one can calculate a Cl residue content of >0 to $\leq 140$ ppm at a productivity of $\geq 50,000$, a Cl content of >0 to $\leq 70$ ppm at a productivity of $\geq 100,000$, and a Cl content of >0 to $\leq 20$ ppm at a productivity of $\geq 300,000$. The copolymers are readily produced in the process of the present invention at productivities of up to about 1,000,000.

The copolymers are granular materials which have an average particle size of the order of 0.127 mm to 1.78 mm (0.005 to 0.07 inches), and preferably, of 0.508 to 1.016 mm (0.02 to 0.04 inches) in diameter. The particle size is important for the purposes of readily fluidizing the polymer particles in the fluid bed reactor, as described below. The copolymers have a bulk density of 224 to 497 kg/m$^3$ (14 to 31 pounds per cubic foot).

The copolymers can be readily produced in a low pressure gas phase fluid bed reaction process, as disclosed below, if a specific monomer charge is polymerized under a specific set of operating conditions, as disclosed below, and in the presence of a specific high activity catalyst, which is also described below.

High activity catalyst

The compounds used to form the high activity catalyst used in the present invention comprise at least one titanium compound, at least one magnesium compound, at least one electron donor compound, at least one activator compound, and at least one porous inert carrier material, as defined below.

The titanium compound has the structure

$$Ti(OR)_a X_b$$

wherein R is a $C_1$ to $C_{14}$ aliphatic or aromatic hydrocarbon radical, or COR' where R' is a $C_1$ to $C_{14}$ aliphatic or aromatic hydrocarbon radical,

X is selected from the group consisting of Cl,

Br, I, or mixtures thereof, a is 0 or 1, b is 2 to 4 inclusive and a+b=3 or 4.

The titanium compounds can be used individually or in combinations thereof, and would include TiCl$_3$ and TiCl$_4$, Ti(OCH$_3$)Cl$_3$, Ti(OC$_6$H$_5$)Cl$_3$, Ti(OCOCH$_3$)Cl$_3$ and Ti(OCOC$_6$H$_5$)Cl$_3$.

The magnesium compound has the structure

$$MgX_2$$

wherein X is selected from the group consisting of Cl, Br, I, or mixtures thereof. Such magnesium compounds can be used individually or in combinations thereof and include MgCl$_2$, MgBr$_2$ and MgI$_2$. Anhydrous MgCl$_2$ is the particularly preferred magnesium compound.

From 0.5 to 56, and preferably 1 to 10, mols of the magnesium compound are used per mol of the titanium compound in preparing the catalysts employed in the present invention.

The titanium compound and the magnesium compound should be used in a form which will facilitate their dissolution in the electron donor compound, as described herein below.

The electron donor compound is an organic compound which is liquid at 25°C. and in which the titanium compound and the magnesium compound are partially or completely soluble. The electron donor compounds are known as such, or as Lewis bases.

The electron donor compounds would include such compounds as alkyl esters of aliphatic and aromatic carboxylic acids, aliphatic ethers, cyclic ethers and aliphatic ketones. Among these electron donor compounds the preferable ones are alkyl esters of $C_1$ to $C_4$ saturated aliphatic carboxylic acids; alkyl esters of $C_7$ to $C_8$ aromatic carboxylic acids; $C_2$ to $C_8$, and preferably $C_3$ to $C_4$, aliphatic ethers; $C_3$ to $C_4$ cyclic ethers, and preferably $C_4$ cyclic mono- of di-ether; $C_3$ to $C_6$, and preferably $C_3$ to $C_4$, aliphatic ketones. The most preferred of these electron donor compounds include methyl formate, ethyl acetate, butyl acetate, ethyl ether, hexyl ether, tetrahydrofuran, dioxane, acetone and methyl isobutyl ketone.

4

The electron donor compounds can be used individually or in combinations thereof.

From 2 to 85, and preferably 3 to 10 mols of the electron donor compound are used per mol of Ti.

The activator compound has the structure

$$Al(R'')_c X'_d H_e$$

wherein X' is Cl or OR''', R'' and R''' are the same or different and are $C_1$ to $C_{14}$ saturated hydrocarbon radicals, d is 0 to 1.5, e is 1 or 0 and c+d+e=3.

Such activator compounds can be used individually or in combinations thereof and would include $Al(C_2H_5)_3$, $Al(C_2H_5)Cl$ $Al(i-C_4H_9)_3$, $Al_2(C_2H_5)_3Cl_3$, $Al(i-C_4H_9)_2H$, $Al(C_6H_{13})_3$, $Al(C_8H_{17})_3$, $Al(C_2H_5)_2H$ and $Al(C_2H_5)_2(OC_2H_5)$.

10 to 400, and preferably 10 to 100, mols of the activator compound are used per mol of the titanium compound in activating the catalyst employed in the present invention.

The carrier materials are solid, particulate porous materials which are inert to the other components of the catalyst composition, and to the other active components of the reaction system. These carrier materials would include inorganic materials such as oxides of silicon and/or aluminium. The carrier materials are used in the form of dry powders having an average particle size of 10 to 250, and preferably of 50 to 150 micrometers. These materials are also porous and have a surface area of $\geqq 3$, and preferably of $\geqq 50$, square meters per gram. Catalyst activity or productivity is apparently also improved with silica having pore sizes of $\geqq 8 \times 10^{-9}$ m and preferably of $\geqq 1 \times 10^{-8}$ m. The carrier material should be dry, that is, free of absorbed water. Drying of the carrier material is carried out by heating it at a temperature of $\geqq 600°C$. Alternatively, the carrier material dried at a temperature of $\geqq 200°C$. may be treated with 1 to 8 weight percent of one or more of the aluminium alkyl compounds described above. This modification of the support by the aluminium alkyl compounds provides the catalyst composition with increased activity and also improves polymer particle morphology of the resulting ethylene polymers.

Catalyst preparation: formation of precursor

The catalyst used in the present invention is prepared by first preparing a precursor composition from the titanium compound, the magnesium compound, and the electron donor compound, as described below, and then impregnating the carrier material with the precursor composition and then treating the impregnated precursor composition with the activator compound in one or more steps as described below.

The precursor composition is formed by dissolving the titanium compound and the magnesium compound in the electron donor compound at a temperature of about 20°C. up to the boiling point of the electron donor compound. The titanium compound can be added to the electron donor compound before or after the addition of the magnesium compound, or concurrent therewith. The dissolution of the titanium compound and the magnesium compound can be facilitated by stirring, and in some instances by refluxing these two compounds in the electron donor compound. After the titanium compound and the magnesium compound are dissolved, the precursor composition may be isolated by crystallization or by precipitation with a $C_5$ to $C_8$ aliphatic or aromatic hydrocarbon such as hexane, isopentane or benzene.

The crystallized or precipitated precursor composition may be isolated, in the form of fine, free flowing particles having an average particle size of 10 to 100 micrometers and a bulk density of 288 to 529 kg/m³ (18 to 33 pounds per cubic foot).

When thus made as disclosed above the precursor composition has the formula

$$Mg_m Ti_l (OR)_n X_p [ED]_q$$

wherein ED is the electron donor compound,

m is $\geqq 0.5$ to $\leqq 56$, and preferably $\geqq 1.5$ to $\leqq 5$,

n is 0, 1 or 2,

p is $\geqq 2$ to $\leqq 116$, and preferably $\geqq 6$ to $\leqq 14$,

q is $\geqq 2$ to $\leqq 85$, and preferably $\geqq 4$ to $\leqq 11$,

R is a $C_1$ to $C_{14}$ aliphatic or aromatic hydrocarbon radical, or COR' wherein R' is a $C_1$ to $C_{14}$ aliphatic or aromatic hydrocarbon radical and,

X is selected from the group consisting of Cl, Br, I or mixtures thereof.

The subscript for the element titanium (Ti) is the arabic numeral one.

Catalyst preparation: impregnation of precursor in support

The precursor composition is then impregnated, in a weight ratio of from 0.033 to 0.33, and preferably 0.1 to 0.33, parts of the precursor composition into one part by weight of the carrier material.

The impregnation of the dried (activated) support with the precursor composition may be accomplished by dissolving the precursor composition in the electron donor compound, and by then admixing the support

EP 0 021 605 B2

with the dissolved precursor composition so as to allow the precursor composition to impregnate the support. The solvent is then removed by drying at temperatures of ≦70°C.

The support may also be impregnated with the precursor composition by adding the support to a solution of the chemical raw materials used to form the precursor composition in the electron donor compound, without isolating the precursor composition from such solution. The excess electron donor compound is then removed by drying or washing and drying at temperatures of ≦70°C.

Activation of precursor composition

In order to be used in the process of the present invention the precursor composition must be fully or completely activated, that is, it must be treated with sufficient activator compound to transform the Ti atoms in the precursor composition to an active state.

It has been found that, in order to prepare a useful catalyst it is necessary to conduct the activation in such a way that, at least the final activation stage must be conducted in the absence of solvent so as to avoid the need for drying the fully active catalyst to remove solvent therefrom. Two procedures have been developed to accomplish this result.

In one procedure, the precursor composition is completely activated, outside the reactor, in the absence of solvent, by dry blending the impregnated precursor composition with the activator compound. In this dry blending procedure the activator compound is used while impregnated in a carrier material. In this procedure the fully activated precursor composition is prepared without having to heat the composition above 50°C. prior to feeding it to the polymerization reactor.

In the second, and preferred of such catalyst activation procedures, the precursor composition is partially activated outside the polymerization reactor with enough activator compound so as to provide a partially activated precursor composition which has an activator compound/Ti molar ratio of >0 to <10:1 and preferably of 4 to 8:1. This partial activation reaction is preferably carried out in a hydrocarbon solvent slurry followed by drying of the resulting mixture, to remove the solvent, at temperatures between 20 to 80, and preferably of 50 to 70°C. The resulting product is a free-flowing solid particulate material which can be readily fed to the polymerization reactor. The partially activated and impregnated precursor composition is fed to the polymerization reactor where the activation is completed with additional activator compound which can be the same or a different compound.

The additional activator compound and the partially activated impregnated precursor composition are preferably fed to the reactor through separate feed lines. The additional activator compound may be sprayed into the reactor in the form of a solution thereof in a hydrocarbon solvent such as isopentane, hexane, or mineral oil. This solution usually contains 2 to 30 weight percent of the activator compound. The additional activator compound is added to the reactor in such amounts as to provide, in the reactor, with the amounts of activator compound and titanium compound fed with the partially activated and impregnated precursor composition, a total Al/Ti molar ratio of ≧10 to 400 and preferably of 15 to 60. The additional amounts of activator compound added to the reactor, react with, and complete the activation of, the titanium compound in the reactor.

In a continuous gas phase process, such as the fluid bed process disclosed below, discrete portions of the partially or completely activated precursor composition impregnated on the support are continuously fed to the reactor, with discrete portions of any additional activator compound needed to complete the activation of the partially activated precursor composition, during the continuing polymerization process in order to replace active catalyst sites that are expended during the course of the reaction.

The polymerization reaction

The polymerization reaction is conducted by contacting a stream of the monomers, in a gas phase process, such as in the fluid bed process described below, and substantially in the absence of catalyst poisons such as moisture, oxygen, carbon monoxide, carbon dioxide and acetylene with a catalytically effective amount of the completely activated precursor composition (the catalyst) impregnated on a support at a temperature and at a pressure sufficient to initiate the polymerization reaction.

In order to achieve the desired density ranges in the copolymers it is necessary to copolymerize enough of the (i) $C_a$ comonomers with ethylene and the Cb comonomers to achieve a level of ≧0.6 to 9 mol percent of the $C_a$ comonomer in the copolymer, and (ii) $C_b$ comonomers with ethylene and the $C_a$ comonomers to achieve a level of ≧0.3 to 7 mol percent of the $C_b$ comonomer in the copolymer. The amounts of the $C_a$ and $C_b$ comonomers needed to achieve this result will depend on the particular comonomers employed.

There is provided below a listing of the amounts, in mols, of various $C_a$ and $C_b$ comonomers that are copolymerized with ethylene in order to provide polymers having the desired density range at any given melt in-

6

dex. The listing also indicates the relative molar concentration, of such comonomers to ethylene, which are to be present in the recycled gas stream of monomers ($C_2$, $C_a$ and $C_b$) under reaction equilibrium conditions in the reactor.

| $C_x$ comonomer | $C_x/C_2$ mol Ratio in gas phase at equilibrium | $C_x/C_2$ mol Ratio in polymer |
|---|---|---|
| propylene | 0.2 to 0.9 | 0.01 to 0.09 |
| butene-1 | 0.1 to 0.5 | 0.006 to 0.08 |
| pentene-1 | 0.05 to 0.2 | 0.005 to 0.07 |
| hexene-1 | 0.02 to 0.15 | 0.004 to 0.06 |
| 4-methyl-pentene-1 | 0.02 to 0.15 | 0.004 to 0.06 |
| heptene-1 | 0.017 to 0.10 | 0.003 to 0.04 |
| octene-1 | 0.015 to 0.08 | 0.003 to 0.04 |

Gas ratios higher than those needed in the gas phase are fed to the reactor to maintain such ratios during the reaction.

A fluidized bed reaction system which can be used in the practice of the process of the present invention is illustrated in the accompanying figure. With reference thereto the reactor 10 consists of a reaction zone 12 and a velocity reduction zone 14.

The reaction zone 12 comprises a bed of growing polymer particles, formed polymer particles and a minor amount of catalyst particles fluidized by the continuous flow of polymerizable and modifying gaseous components in the form of make-up feed and recycle gas through the reaction zone. To maintain a viable fluidized bed, the mass gas flow rate through the bed must be above and minimum flow required for fluidization, and preferably from 1.5 to 10 times $G_{mf}$ and more preferably from 3 to 6 times $G_{mf}$. $G_{mf}$ is used in the accepted form as the abbreviation for the minimum mass gas flow required to achieve fluidization, C. Y. Wen and Y. H. Yu, "Mechanics of Fluidization", Chemical Engineering Progress Symposium Series, Vol. 62, P. 100-111 (1966).

It is essential that the bed always contains particles to prevent the formation of localized "hot spots" and to entrap and distribute the particulate catalyst throughout the reaction zone. On start up, the reaction zone is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired polymer particles supplants the start-up bed.

The partially or completely activated precursor compound (the catalyst) used in the fluidized bed is preferably stored for service in a reservoir 32 under a blanket of a gas which is inert to the stored material, such as nitrogen and argon.

Fluidization is achieved by a high rate of gas recycle to and through the bed, typically in the order of about 50 times the rate of feed of make-up gas. The fluidized bed has the general appearance of a dense mass of viable particles in possible free-vortex flow as created by the percolation of gas through the bed. The pressure drop through the bed is equal to or slightly greater than the mass of the bed divided by the cross-sectional area. It is thus dependent on the geometry of the reactor.

Make-up gas is fed to the bed at a rate equal to the rate at which particulate polymer product is withdrawn and to compensate for such amounts of the gaseous monomers as are lost in recovering the polymer from the reactor. The composition of the make-up gas is determined based on an analysis of the recycle gas by a gas analyzer 16 positioned above the bed. The gas analyzer determines the composition of the gas being recycled and the feed rate of the components of the make-up gas are adjusted accordingly to maintain an essentially steady state gaseous composition within the reaction zone.

To ensure complete fluidization, the recycle gas and, where, desired, part of the make-up gas are returned to the reactor at point 18 below the bed. There exists a gas distribution plate 20 above the point of return to aid fluidizing the bed.

The portion of the gas stream which does not react in the bed constitutes the recycle gas which is removed from the polymerization zone, preferably by passing it into a velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is then compressed in a compressor 25 and then passed through a heat exchanger 26 wherein it is stripped of heat of reaction before it is returned to the bed. By constantly removing heat of reaction, no noticeable temperature gradient appears to exist within the upper portion of the bed. A temperature gradient will exist in the bottom of the bed in a layer of 15.2 to 30.4 cm (6 to 12 inches), between the temperature of the inlet gas and the temperature of the remainder of the bed. Thus, it has been observed that the bed acts almost immediately to adjust the temperature of the recycle gas above this bottom layer of the bed zone to make it conform to the temperature of the remainder of the bed thereby maintaining itself at an essentially constant temperature under steady state conditions. The recycle is then returned to the reactor at its base 18 and to the fluidized bed through distribution plate 20. The compressor 25 can also be placed downstream of the heat exchanger 26.

The $C_2$, $C_a$ and $C_b$ monomers are fed into the reactor through gas inlet 18. To avoid condensation of the $C_5$-$C_8$ comonomers, in particular, in the reaction system it is desirable to maintain the temperature of the $C_2$/$C_a$/$C_b$ gas mixture in the reaction system above the dew point of such mixture. This is primarily done by maintaining the temperature of the gas mixture at least 3 to 10°C. above the dew point of the gas mixture. This may be done by adjusting the temperature of the cooling medium in heat exchanger 26. Any of the $C_5$ to $C_8$, in particular, comonomers that may condense out on the cooling surfaces of heat exchanger 26 are readily revaporized by contact with a portion or all of the recycled gas stream which is maintained at a temperature above the dew point.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, or a plate of the bubble cap type. The elements of the plate may all be stationary, or the plate may be of the mobile type disclosed in U.S.-A-3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction of the present invention. The ratio of hydrogen/ethylene employed will vary between 0 to 2.0 moles of hydrogen per mole of the monomer in the gas stream.

Any gas inert to the catalyst and reactants can also be present in the gas stream. The activator compound is preferably added to the reaction system at the hottest portion of the gas which is usually downstream from heat exchanger 26. Thus, the activator may be fed into the gas recycle system from dispenser 27 through line 27a.

Compounds of the structure $Zn(R_a)(R_b)$, wherein $R_a$ and $R_b$ are the same or different $C_1$ to $C_{14}$ aliphatic or aromatic hydrocarbon radicals, may be used in conjunction with hydrogen, with the catalysts of the present invention as molecular weight control or chain transfer agents, that is, to increase the melt index values of the copolymers that are produced. 0 to 50, and preferably 20 to 30, mols of the Zn compound (as Zn) would be used in the gas stream in the reactor per mol of titanium compound (as Ti) in the reactor. The zinc compound would be introduced into the reactor preferably in the form of a dilute solution (2 to 30 weight percent) in hydrocarbon solvent or absorbed on a solid diluent material, such as silica, of the types described above, in amounts of 10 to 50 weight percent. These compositions tend to be pyrophoric. The zinc compound may be added alone, or with any additional portions of the activator compound that are to be added to the reactor from a feeder, not shown, which could be positioned adjacent dispenser 27, near the hottest portion of the gas recycle system.

It is essential to operate the fluid bed reactor at a temperature below the sintering temperature of the polymer particles. To ensure that sintering will not occur, operating temperatures below the sintering temperature are desired. For the production of ethylene copolymers in the process of the present invention an operating temperature of 65 to 105°C. is preferred, and a temperature of 75 to 95°C. is most preferred. Temperatures of 80 to 90°C. are used to prepare products having a density of 910 to 920 kg/m³ (0.91 to 0.92), and temperatures of 85 to 92°C. are used to prepare products having a density of >920 to 940 kg/m³ (0.92 to 0.94).

The fluid bed reactor is operated at pressures of from 345 to 6897 kPa (50 to 1000 psi), and is preferably operated at a pressure of from 1034 to 2413 kPa (150 to 350 psi), with operation at the higher pressures in such ranges favoring heat transfer since an increase in pressure increases the unit volume heat capacity of the gas. An increase in pressure also increases the dew point of the gas mixture.

The partially or completely activated precursor composition is injected into the bed at a rate equal to its consumption at a point 30 which is above the distribution plate 20. Injecting the catalyst at a point above the distribution plate is an important feature of this invention. Since the catalyst used in the practice of the invention are highly active, injection of the fully activated catalyst into the area below the distribution plate may cause polymerization to begin there and eventually cause plugging of the distribution plate. Injection into the viable bed, instead, aids in distributing the catalyst throughout the bed and tends to preclude the formation of localized spots of high catalyst concentration which may result in the formation of "hot spots".

A gas which is inert to the catalyst such as nitrogen or argon is used to carry the partially or completely activated precursor composition, and any additional activator compound or non-gaseous chain transfer agent that is needed, into the bed.

The production rate of the bed is controlled by the rate of catalyst injection. The production rate may be increased by simply increasing the rate of catalyst injection and decreased by reducing the rate of catalyst injection.

Since any change in the rate of catalyst injection will change the rate of generation of the heat of reaction, the temperature of the recycle gas entering the reactor is adjusted upwards or downwards to accommodate the change in rate of heat generation. This ensures the maintenance of an essentially constant temperature in the bed. Complete instrumentation of both the fluidized bed and the recycle gas cooling system, is, of course, necessary to detect any temperature change in the bed so as to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20 and in suspension with a portion of the gas stream which is vented before the particles settle to preclude further polymerization and sintering when the particles reach their ultimate collection zone. The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 is opened to emit a plug of gas and product to the zone 40 between it and valve 36 which is then closed. Valve 38 is then opened to deliver the product to an external recovery zone. Valve 38 is then closed to await the next product recovery operation.

Finally, the fluidized bed reactor is equipped with an adequate venting system to allow venting the bed during start up and shut down. The reactor does not require the use of stirring means and/or wall scraping means.

The highly active supported catalyst system of this invention appears to yield a fluid bed product having an average particle size from 0.127 to 1.78 mm (0.005 to 0.07 inches) and preferably 0.508 to 1.016 mm (0.02 to 0.04 inches).

The feed stream of gaseous monomer, with or without inert gaseous diluents, is fed into the reactor at a space time yield of 16 to 160 kg/hr · m³ (1 to 10 pounds/hour/cubic foot) of bed volume.

## Examples

The following examples are designed to illustrate the polymers of the present invention and their formation and are not intended as a limitation on the scope thereof.

The properties of the polymers disclosed herein were determined by the following test methods.

## Density

ASTM D-1505-Plaque is conditions for one hour at 100°C. to approach equilibrium crystallinity-Reported as kilo/grams per cubic meter (kg/m³); All density measurements are made in a density gradient column.

Melt index (MI)

ASTM D-1238-Condition E-measured at 190°C.-reported as grams per 10 minutes, ie. dg/min.

Flow rate (HLMI)

ASTM D-1238-Condition F measured at 10 times the weight used in the melt index test above.

Melt flow ratio (MFR)

=Flow Rate/Melt Index.

Molecular weight distribution, $M_w/M_n$

Gel Permeation Chromatography Styragel Packing: Pore size packing sequence is $10^{-3}$, $10^{-5}$, $10^{-6}$, $10^{-7}$, $6\times10^{-9}$m. Solvent Perchloroethylene at 117°C. Detection: Infrared at 3.45 μm.

Unsaturation

Infrared Spectrophotometer (Perkin Elmer Model 21) Pressings 0.625 mm (25 mils) in thickness are used. Absorbance is measured at 10.35 μm for trans vinylene; 11.00 μm for terminal vinyl, and 11.25 μm for pendant vinylidene. The absorbance per μm at each wavelength is directly proportional to the product of unsaturation concentration and absorptivity. Absorptivities were taken from the literature values of deKock, R. J. and Hol, P., A., H., M., J. Poly. Sci. Part B, 2, 339 (1964).

Tm°C.

Each resin sample, run as a 0.127 to 0.150 mm (5-6 mil) thick film was subject to the same thermal pre-treatment prior to data collection. Specimens were heated under nitrogen at full power to 150°C., held isothermally for 5 minutes, and then cooled at the rate of 10°C/minute to 50°C. For measurements of the melting point the heating rate was 10°C/minute. Measurements are made on a duPont differential thermal analyzer-Model 990.

Intrinsic Elmendorf tear strength

A 63.5 mmx88.9 mm (2-1/2 in.×3-1/2 in.) film specimen is subject to a "pant leg" type tear. This is a pendulum impulse type test. It measures the force required to propagate a tear. The tear strength is measured in kilo grams. The data presented herein have been normalized by film thickness and reported as kg/cm (g/mil).

Compression molding of film sample for intrinsic Elmendorf tear strength test

A 0.127 mm (5 mil) thick compression molded film having little molecular orientation is prepared using the following press conditions: preheat sample at 170°C. for 7 minutes at minimum pressure, then press sample at 17237 kPa (2500 psi) for 3 minutes, and then cool quickly to 20 to 30°C. at a rate of 20 to 30°C./minute.

Bulk density

The resin is poured via 9.5 mm (3/8 inches) diameter funnel into a 100 ml graduated cylinder to 100 ml line without shaking the cylinder, and weighed by difference. The data are reported in kg/m³ (lbs/ft³).

Productivity

A sample of the resin product is ashed, and the weight % of ash is determined; since the ash is essentially composed of the catalyst, the productivity is thus the kilograms of polymer produced per kilogram of total catalyst consumed. The amount of Ti, Mg and Cl in the ash are determined by elemental analysis.

n-Hexane extractables

(FDA test used for polyethylene film intended for food contact applications). A 0.129 square meter (200 square inch) sample of 0.0375 mm (1.5 mil) gauge film is cut into strips measuring 25.4 mmx152.4 mm (1"×6") and weighed to the nearest 0.1 mg. The strips are placed in a vessel and extracted with 300 ml of n-hexane at 50±1°C. for 2 hours. The extract is then decanted into tared culture dishes. After drying the extract in a vacuum desiccator the culture dish is weighed to the nearest 0.1 mg. The extractables, normalized with respect to the original sample weight, is then reported as the weight fraction of n-hexane extractables.

Examples

Ia. Preparation of impregnated precursor

In a 12 liter flask equipped with a mechanical stirrer are placed 41.8 g (0.439 mol) anhydrous $MgCl_2$ and 2.5 liter tetrahydrofuran (THF). To this mixture, 27.7 g (0.184 mol) $TiCl_4$ is added dropwise over 1/2 hour. It may be necessary to heat the mixture to 60°C. for about 1/2 hour in order to completely dissolve the material.

The precursor composition can be isolated from solution by crystallization or precipitation. It may be analyzed at this point for Mg and Ti content since some of the Mg and/or Ti compound may have been lost during the isolation of the precursor composition. The empirical formulae used herein in reporting the precursor compositions are derived by assuming that the Mg and the Ti still exist in the form of the compounds in which they were first added to the electron donor compound. The amount of electron donor is determined by chromatography.

500 g of porous silica dehydrated at 800°C. and optionally treated with 4 to 8 wt.% triethyl aluminium is added to the above solution and stirred for 1/4 hour. The mixture is dried with a $N_2$ purge at 60°C. for about 3-5 hours to provide a dry free flowing powder having the particle size of the silica. The absorbed precursor composition has the formula

$$TiMg_{3.0}Cl_{10}(THF)_{6.7}$$

Ib. Preparation of impregnated precursor from preformed precursor composition

In a 12 liter flask equipped with a mechanical stirrer, 146 g of precursor composition is dissolved in 2.5 liters dry THF. The solution may be heated to 60°C. in order to facilitate dissolution. 500 g of porous silica is added and the mixture is stirred for 1/4 hour. The mixture is dried with a $N_2$ purge at ≦60°C. for 3-5 hours to provide a dry free flowing powder having the particle size of the silica.

II. Activation procedure

The desired weights of impregnated precursor composition and activator compound are added to a mixing tank with sufficient amounts of anhydrous aliphatic hydrocarbon diluent such as isopentane to provide a slurry system.

The activator compound and precursor compound are used in such amounts as to provide a partially activated precursor composition which has an Al/Ti ratio of >0 to ≦10:1 and preferably of 4 to 8:1.

The contents of the slurry system are then thoroughly mixed at room temperature and at atmospheric pressure for 1/4 to 1/2 hour. The resulting slurry is then dried under a purge of dry inert gas such as nitrogen or argon, at atmospheric pressure and at a temperature of 65±10°C. to remove the hydrocarbon diluent. This process usually requires 3 to 5 hours. The resulting catalyst is in the form of a partially activated precursor composition which is impregnated within the pores of the silica. The material is a free flowing particulate material having the size and shape of the silica. It is not pyrophoric unless the aluminum alkyl content exceeds a loading of 10 weight percent. It is stored under a dry inert gas such as nitrogen or argon prior to future use. It is now ready for use and injected into, and fully activated within, the polymerization reactor.

When additional activator compound is fed to the polymerization reactor for the purpose of completing the activation of the precursor composition, it is fed into the reactor as a dilute solution in a hydrocarbon solvent such as isopentane. These dilute solutions contain 5 to 30% by volume of the activator compound.

The activtor compound is added to the polymerization reactor so as to maintain the Al/Ti ratio in the reactor at a level of ≧10 to 400:1 and preferably of 15 to 60:1.

Examples 1 to 5

Ethylene was terpolymerized with butene-1 and hexene-1 in each of this series of examples to produce terpolymers having a density of 921 to 927 and a melt index of 1.75 to 2.75.

In these examples the silica impregnated catalyst precursor was formed as described above. The silica impregnated catalyst system contained 20.0 weight % of precursor composition. The silica support used for the catalysts of these examples was treated with 4% by weight of triethyl aluminum, before it was used to make the supported catalyst system. In each of these examples the precursor composition was partially activated with the aluminium compound shown in Table A, according to the procedure as described above, so as to provide the impregnated precursor with an Al/Ti mol ratio as shown in Table A. The completion of the activation of the precursor composition in the polymerization reactor was accomplished with a 5% by weight solution of triethyl aluminium in isopentane so as to provide the completely activated catalyst in the reactor with an Al/Ti mol ratio of about 50.

Each of the polymerization reactions was conducted for about 1 hour, after equilibrium was reached, at 85°C. and under a pressure of 1034 to 1724 kPa (150 to 250 psig), a gas velocity of 3 to 6 times $G_{mf}$ and a space time yield of 64 to 96 kg/hr · m$^3$ (4 to 6 pounds/hour/cubic foot) of bed space in a fluid bed reactor system as described in the Drawing referred to above. It has a lower section 3.05 m (10 feet) high and 34.3 cm (13-1/2 inches) in (inner) diameter, and an upper section which was 4.88 m (16 feet) high and 59.7 cm (23-1/2 inches) in (inner) diameter. The reactor inlet (gas) temperature was in the range of 70 to 85°C. The dew points of the gas mixtures were in the range of 45-55°C. at an operating pressure of 1034 kPa (150 psig) and in the range of 50-65°C. at an operating pressure of 1379 to 1724 kPa (200-250 psig).

Table A below lists the activator compound and Al/Ti mole ratio in preparing the partially activated precursor composition; the reaction pressure; the $H_2/C_2$, $C_4/C_2$ and $C_6/C_2$ mol ratios in the reactors; and the dew point of the gas mixture used in each example.

Table B below lists properties of the resins made in Examples 1 to 5, i.e., density; melt index (M.I.); melt flow ratio (MFR); bulk density; productivity; branches; BCF values; intrinsic tear strengths and melting points (M.P.).

The average intrinsic tear strength values of the terpolymers of Examples 1-5 were ≧85% of the average intrinsic tear strength values of ethylene/hexene-1 copolymers having a density of about 920 and a melt index of about 2.0 that could be made with the catalyst systems of the present invention. The intrinsic tear strength values of the terpolymers of such examples were also approximately two times the tear strength values of ethylene-butene-1 copolymers having the same approximate density and melt index values, and made with the catalyst systems of the present invention.

EP 0 021 605 B2

## TABLE A
Reaction conditions for production of terpolymers in fluid bed reactor

| Example | Activator | Al/Ti ratio in part. act. precursor | Temperature °C. | Pressure kPa (psig) | $H_2/C_2$ Ratio | $C_4/C_2$ Ratio | $C_6/C_2$ Ratio |
|---|---|---|---|---|---|---|---|
| 1 | THAL | 5.6 | 85 | 1379 (200) | 0.18 | 0.13 | 0.11 |
| 2 | THAL | 5.6 | 85 | 1034 (150) | 0.21 | 0.16 | 0.16 |
| 3 | TEAL | 3.0 | 85 | 1724 (250) | 0.23 | 0.13 | 0.08 |
| 4 | THAL | 5.6 | 85 | 1551 (225) | 0.25 | 0.17 | 0.07 |
| 5 | TEAL | 3.0 | 85 | 1724 (250) | 0.26 | 0.24 | 0.07 |

THAL=trihexyl aluminum
TEAL=triethyl aluminum

## TABLE B
Composition of terpolymers prepared under conditions shown in Table A

| Example | Density kg/m³ | M.I. dg/min | MFR | Bulk density (lbs/ft³) kg/m³ | Productivity | Branches/1000C atoms in polymer chain $C_2H_5$ | $C_4H_9$ | BCF | Intrinsic tear strength (g/mil) kg/cm | M.P. Tm,°C. |
|---|---|---|---|---|---|---|---|---|---|---|
| 1 | 918 | 1.9 | 30 | (24) 384 | 1000 | 11 | 13.3 | 0.55 | (350) 138 | 122.7 |
| 2 | 919 | 1.75 | 31 | (23) 368 | 700 | 8.5 | 9.8 | 0.54 | (320) 126 | — |
| 3 | 927 | 1.8 | 29 | (18) 288 | 2800 | 5.1 | 5.4 | 0.51 | (235) 92.5 | 123.6 |
| 4 | 921 | 2.4 | 27 | (25) 400 | 1400 | 8.9 | 9.0 | 0.50 | (268) 105 | 122.9 |
| 5 | 921 | 2.75 | 30 | (14) 224 | 1900 | 11.9 | 8.0 | 0.40 | (306) 120 | 122.1 |

Example 6

Ethylene was terpolymerized with propylene and hexene-1 in this example.

The catalyst was prepared as in Examples 1-5, and the catalyst precursor was partially activated with triethyl aluminium so as to provide the impregnated precursor with an Al/Ti mol ratio of about 6.5.

13

The polymerization reaction was conducted as in Examples 1-5 for about 1 hour, after equilibrium was reached, at 85°C. and under a pressure of 1861 kPa (270 psig), a gas velocity of about 3 to 4 times $G_{mf}$, and a space time yield of 80 to 96 kg/hr · m³ (5 to 6 pounds/hour/cubic foot) of bed space. The reactor inlet (gas) temperature was in the range of 70-80°C., and the dew point of the gas mixture was in the range of 40-62°C.

The molar gas ratios used in the reactor were $H_2/C_2$=0.16; $C_3/C_2$=0.23; $C_6/C_2$=0.10.

The resulting terpolymer was heterogeneous, with a melting point of 120.5°C. (Tm). It had a density of 918, a melt index of 2.0, a MFR of 25-29 and a bulk density of 304-336 (19-21). It was produced at a productivity level of about 2000.

The polymer had 10.5 $CH_3$ branches and 9.5 $C_4H_9$ branches per 1000 C atoms, and a BCF of 0.47. It had an intrinsic tear strength of 148 kg/cm (377 g/mil). The intrinsic tear strength of this terpolymer is ≧85% of the tear strength of ethylene hexene-1 copolymers having the same melt index and density when made with the same catalyst.

The melting point values of the terpolymers produced in all these examples indicates that the polymers are heterogeneous.

Short Chain Branch frequency in the polymer was measured using a $^{13}C$ NMR (nuclear magnetic resonance) test procedure, on a Varian model CFT-20 test instrument. Test samples were dissolved in deuterated ortho dichlorobenzene at a concentration of 10% polymer by weight at a temperature of 120°C. Accumulated scans numbered ≧30,000.

The productivity values reported above for Examples 1 to 6 are reported in units of kilograms of polymer produced per kilogram of total catalyst consumed, as noted above in the description of the test procedure used for the determination of productivity. Productivity may also be expressed, as noted further above in the description of the ethylene copolymers, in productivity levels based on the kilograms of polymer produced per kilogram of titanium metal employed in the catalyst which is consumed. As thus noted above, these latter values will, in the case of the copolymers of the present invention, exceed a level of 50,000, and can be as high as up to about 1,000,000. The productivity values provided above in Examples 1 to 6 range, in gross numbers, from 700 to 2800. In order to convert the productivity values expressed in Examples 1 to 6, which are based on the kilograms of the total catalyst consumed, into productivity values related to the amount of titanium in the catalyst which is consumed, it is necessary to multiply the stated productivity values of Examples 1 to 6 by a factor of 100. This is based on the fact that the catalysts which were used to make the copolymers of Examples 1 to 6 contained 80 weight % of silica and 20 weight % of the precursor composition, and the precursor composition contained approximately 5 weight % of titanium metal. This corresponds, therefore, to a titanium metal content in the total catalyst of 1%. Thus, the two productivity levels for each of Examples 1 to 6 would have the following values.

|  | Productivity | |
|---|---|---|
|  | Kilograms of polymer produced | |
| Example | Per kilogram of total catalyst consumed | Per kilogram of Ti metal in consumed catalyst |
| 1 | 1000 | 100,000 |
| 2 | 700 | 70,000 |
| 3 | 2800 | 280,000 |
| 4 | 1400 | 140,000 |
| 5 | 1900 | 190,000 |
| 6 | 2000 | 200,000 |

**Claims**

1.   An ethylene-based hydrocarbon polymer, in granular and fluidizable form, comprising ethylene, a $C_a$ monomer and a $C_b$ monomer, wherein the $C_a$ monomer is propylene or butene-l or a mixture thereof, and the $C_b$ monomer is

one or more $C_5$ to $C_8$ alpha monoolefins which contain no branching closer than the fourth carbon atom, wherein:

the molar ratio in the polymer of $\dfrac{C_a}{C_2}$

is from 0.006 to 0.09 and the molar ratio of $\dfrac{C_b}{C_2}$

is from 0.003 to 0.07, and

the branch chain factor is from 0.2 to 0.8, and wherein:

the polymer is heterogeneous and has a density of from 910 to 940 kg/m³,

n-hexane extractables content at 50°C of less than about 5.5 weight percent,

melt index of from 0.5 to 5.0 dg/min,

$M_w/M_n$ of from 2.7 to 4.3,

melt flow ratio of from 22 to 36,

bulk density of 224 to 497 kg/m³ (14 to 31 pounds per cubic foot) and

an average particle size of 0.127 mm to 1.78 mm (0.005 to 0.07 inches).

2. A polymer as claimed in claim 1 in which $C_a$ is propylene.

3. A polymer as claimed in claim 1 in which $C_a$ is butene-1.

4. A polymer as claimed in any one of the preceding claims in which $C_b$ is hexene-1.

5. A polymer as claimed in any one of the preceding claims having a density of about 920 kg/m³ and an Elmendorf tear strength in compression molded film form of from 39 to 315 kg/cm.

6. Film formed from a polymer as claimed in any one of the preceding claims.

7. A continuous process for making, in the gas phase and at a level of productivity of at least 700 kilograms of polymer per kilogram of total catalyst, heterogeneous ethylene-based hydrocarbon polymers having, in compression moulded film form, Elmendorf tear strength values of from 39 to 315 Kg/cm., which comprises interpolymerizing ethylene with $C_a$ and $C_b$ monomers maintained throughout the process in the molar ratios in the gas phase of

$$\frac{C_a}{C_2}$$

of from 0.1 to 0.9 and of

$$\frac{C_b}{C_2}$$

of from 0.015 to 0.2

wherein the $C_a$ monomer is propylene or butene-1 or a mixture thereof and the $C_b$ monomer is one or more $C_5$ to $C_8$ alpha monolefins which contain no branching closer than the fourth carbon atom,

in a reaction zone having a pressure of from 345 to 6897 kPa/m² and a temperature of from 65 to 105°C., with an activated catalyst formed from the activator compound and a precursor compound.

said activator compound having the structure:

$$Al(R'')_c X'_d H_e$$

wherein X' is Cl or OR''', R'' and R''' are the same or different and are $C_1$ to $C_{14}$ saturated hydrocarbon radicals, d is 0 to 1.5, e is 1 or 0 and c+d+e=3, said precursor compound having the general formula:

$$Mg_m Ti_l (OR)_n X_p (ED)_q$$

wherein ED is an electron donor compound which is an organic compound which is liquid at 25°C. at atmospheric pressure, and in which the titanium compound and magnesium compound used to form said precursor compound are soluble,

m is $\geq 0.5$ to $\leq 56$,

n is 0, 1 or 2,

p is $\geq 2$ to $\leq 116$,

q is $\geq 2$ to $\leq 85$,

R is a $C_1$ to $C_{14}$ aliphatic or aromatic hydrocarbon radical or COR' wherein R' is a $C_1$ to $C_{14}$ aliphatic or aromatic hydrocarbon radical.

X is Cl, Br, I or a mixture thereof, and

15

said precursor compound being impregnated in porous carrier material so as to provide a weight ratio of from 0.033 to 0.33 parts of precursor compound to one part of said carrier material, and said precursor compound being activated by treating the impregnated precursor compound outside the polymerization reactor in a hydrocarbon slurry with >0 to <10 mols of activator compound per mol of titanium compound in said precursor compound, drying the mixture to obtain a free-flowing solid particulate material, and feeding the impregnated precursor compound into the polymerization reactor wherein it is further activated by adding additional activator compound into the reactor in such amounts as to provide $\geq$10 to $\leq$400 total mols of said activator compound per mol of titanium compound in said precursor compound.

8.  A process as claimed in claim 7 in which $C_a$ is propylene.

9.  A process as claimed in claim 7 in which $C_a$ is butene-1.

10.  A process as claimed in any one of claims 7 to 9 in which $C_b$ is hexene-1.

11.  A process as claimed in claim 7 in which said carrier material is an oxide of silicon or of aluminium, or a mixture thereof.

12.  A process as claimed in claim 11 in which said carrier material is silica.

13.  A process as claimed in claim 7 in which m is $\geq$1.5 to $\leq$5, n is 0, p is $\geq$6 to $\leq$14 and q is $\geq$4 to $\leq$11.

14.  A process as claimed in claim 13 in which X is Cl.

15.  A process as claimed in claim 14 in which said electron donor is an alkyl ester of an aliphatic or aromatic carboxylic acid, an aliphatic ether, a cyclic ether, or an aliphatic ketone.

16.  A process as claimed in claim 15 in which said electron donor is tetrahydrofuran.

17.  A process as claimed in claim 7 in which said precursor compound is activated outside the polymerization reactor with from 4 to 8 mols of activator compound per mol of titanium compound in said precursor compound.

18.  A process as claimed in claim 17 in which said precursor compound is further activated in said reactor with sufficient activator compound to provide from 15 to 60 total mols of activator compound per mol of titanium compound in said precursor compound.

19.  A process as claimed in claim 7 in which unreacted monomer is removed from said reaction zone, passed through heat exchanger means external to said reaction zone to remove heat of reaction therefrom, and recycled to said reaction zone while maintaining the temperature of said recycled monomer above the dew point of the mixture of monomers therein.

20.  A process as claimed in claim 19 in which the temperature of said mixture of monomers is maintained at least from 3 to 10°C. above said dew point.

21.  A process as claimed in claim 20 in which said polymers are made at a level of productivity of at least 1000 kilograms of polymer per kilogram of total catalyst.

22.  A process as claimed in claim 21 in which said polymers are made at a level of productivity of up to 2800 kilograms of polymer per kilogram of catalyst.

23.  A process as claimed in claim 7 which is conducted in a fluid bed reaction process.

24.  A process as claimed in claim 23 which is conducted at a mass gas flow rate through the fluidized bed used in said process of from 1.5 to about 10 times $G_{mf}$.

## Patentansprüche

1.  Kohlenwasserstoff-Polymer auf Ethylenbasis, in kornförmiger und fluidisierbarer Form, umfassend Ethy-

len, ein $C_a$ Monomer und ein $C_b$ Monomer, worin das $C_a$ Monomer Propylen oder Buten-1 oder eine Mischung derselben ist und das $C_b$ Monomer ein oder mehrere $C_5$ bis $C_8$ $\alpha$-Monoolefine ist, die keine Verzweigung näher als am vierten Kohlenstoffatom enthalten, worin das molare Verhältnis im Polymer von $\frac{C_a}{C_2}$ von 0,006 bis 0,09 beträgt und das molare Verhältnis von $\frac{C_b}{C_2}$ von 0,003 bis 0,07 beträgt und der Verzweigungsfaktor von 0,2 bis 0,8 beträgt und worin das Polymer heterogen ist und eine Dichte von 910 bis 940 kg/m³,
einen Gehalt an mit n-Hexan bei 50°C extrahierbaren Materialien von weniger als etwa 5,5 Gew.-%,
einen Schmelzindex von 0,5 bis 5,0 dg/min,
ein $M_w/M_n$ von 2,7 bis 4,3,
ein Schmelzflußverhältnis von 22 bis 36,
eine Schüttdichte von 224 bis 497 kg/m³ (14 bis 31 pounds per cubic foot) und eine durchschnittliche Teilchengröße von 0,127 mm bis 1,78 mm (0,005 bis 0,07 inch)
aufweist.

2. Polymer nach Anspruch 1, in welchem $C_a$ Propylen ist.

3. Polymer nach Anspruch 1, in welchem $C_a$ Buten-1 ist.

4. Polymer nach einem der vorhergehenden Ansprüche, in welchem $C_b$ Hexen-1 ist.

5. Polymer nach einem der vorhergehenden Ansprüche mit einer Dichte von etwa 920 kg/m³ und einer Elmendorf-Reißfestigkeit in Form eines gepreßtem Filmes von 39 bis 315 kg/cm.

6. Film, gebildet aus einem Polymer, wie es in einem der vorhergehenden Ansprüche beansprucht wird.

7. Kontinuierliches Verfahren zur Herstellung, in der Gasphase und bei einer Produktivität von mindestens 700 kg Polymer pro kg Gesamtkatalysator, eines heterogenen Kohlenwasserstoff-Polymers auf Ethylenbasis mit Elmendorf-Reißfestigkeitswerten in Form eines gepreßten Filmes von 39 bis 315 kg/cm, dadurch gekennzeichnet, daß man Ethylen mit $C_a$ und $C_b$ Monomeren, die während des gesamten Verfahrens in molaren Verhältnissen in der Gasphase von $\frac{C_a}{C_2}$ von 0,1 bis 0,9 und von $\frac{C_b}{C_2}$ von 0,015 bis 0,2 gehalten werden,
worin das $C_a$ Monomer Propylen oder Buten-I oder eine Mischung derselben ist und das $C_b$ Monomer ein oder mehrere $C_5$ bis $C_8$ $\alpha$-Monoolefine ist, die keine Verzweigung näher als am vierten Kohlenstoffatom enthalten,
in einer Reaktionszone mit einem Druck von 345 bis 6897 kPa/m² und einer Temperatur von 65 bis 105°C mit einem aktivierten Katalysator, gebildet aus der Aktivatorverbindung und einer Vorläuferverbindung, polymerisiert,
wobei die Aktivatorverbindung die Struktur

$$Al(R'')_c X'_d H_e$$

hat, worin X' Cl oder OR''' ist, R'' und R''' gleich oder verschieden sind und gesättigte $C_1$ bis $C_{14}$ Kohlenwasserstoffreste sind, d 0 bis 1,5 ist, e 1 oder 0 ist und c + d + e = 3 ist, die Vorläuferverbindung die allgemeine Formel

$$Mg_m Ti_l (OR)_n X_p (ED)_q$$

hat, worin ED eine Elektrondonorverbindung ist, die eine bei 25°C und atmosphärischem Druck flüssige, organische Verbindung ist und in welcher die zur Bildung der Vorläuferverbindung verwendete Titanverbindung und Magnesiumverbindung löslich sind,
m ≧0,5 bis ≦56, ist,
n 0, 1 oder 2 ist,
p ≧2 bis ≦116 ist,
q ≧2 bis ≦85 ist,
R ein aliphatischer oder aromatischer $C_1$ bis $C_{14}$ Kohlenwasserstoffrest oder COR' ist, worin R' ein aliphatischer oder aromatischer $C_1$ bis $C_{14}$ Kohlenwasserstoffrest ist,
X Cl, Br, I oder eine Mischung derselben ist, und wobei die Vorläuferverbindung in einem porösen Trägermaterial so imprägniert ist, daß sich ein Gewichtsverhältnis von 0,033 bis 0,33 Teilen Vorläuferverbindung zu einem Teil des Trägermaterials ergibt, und die Vorläuferverbindung aktiviert wird, indem man die imprägnierte Vorläuferverbindung außerhalb des Polymerisationsreaktors in einer Kohlenwasserstoffaufschlämmung mit >0 bis <10 Mol Aktivatorverbindung pro Mol Titanverbindung in der Vorläuferverbindung behandelt, die Mischung zur Erzielung eines frei fließenden, festen, teilchenförmigen Materials trocknet und die imprägnierte Vorläuferverbindung in den Polymerisationsreaktor einführt, in welchem sie weiter durch Zugabe von zusätzlicher Aktivatorverbindung in den Reaktor in solchen Mengen, daß sich $\geq$10 bis $\leq$400 Gesamtmol Aktivatorverbindung pro Mol Titanverbindung in der Vorläuferverbindung ergeben, aktiviert wird.

8. Verfahren nach Anspruch 7, in welchem $C_a$ Propylen ist.

9. Verfahren nach Anspruch 7, in welchem $C_a$ Buten-1 ist.

10. Verfahren nach einem der Ansprüche 7 bis 9, in welchem $C_b$ Hexen-1 ist.

11. Verfahren nach Anspruch 7, in welchem das Trägermaterial ein Oxid von Silicium oder Aluminium oder eine Mischung derselben ist.

12. Verfahren nach Anspruch 11, in welchem das Trägermaterial Kieselsäure ist.

13. Verfahren nach Anspruch 7, in welchem m $\geq$1,5 bis $\leq$5 ist, n 0 ist, p $\geq$6 bis $\leq$14 ist und q $\geq$4 bis $\leq$11 ist.

14. Verfahren nach Anspruch 13, in welchem X Cl ist.

15. Verfahren nach Anspruch 14, in welchem die Elektronendonorverbindung ein Alkylester einer aliphatischen oder aromatischen Carbonsäure, ein aliphatischer Ether, ein cyclischer Ether oder ein aliphatisches Keton ist.

16. Verfahren nach Anspruch 15, in welchem die Elektronendonorverbindung Tetrahydrofuran ist.

17. Verfahren nach Anspruch 7, in welchem die Vorläuferverbindung außerhalb des Polymerisationsreaktors mit 4 bis 8 Mol Aktivatorverbindung pro Mol Titanverbindung in der Vorläuferverbindung aktiviert wird.

18. Verfahren nach Anspruch 17, in welchem die Vorläuferverbindung weiter im Reaktor mit ausreichend Aktivatorverbindung aktiviert wird, um 15 bis 60 Gesamtmol Aktivatorverbindung pro Mol Titanverbindung in der Vorläuferverbindung zu ergeben.

19. Verfahren nach Anspruch 7, in welchem nicht umgesetztes Monomer aus der Reaktionszone entfernt und durch eine außerhalb der Reaktionszone angeordnete Wärmeaustauschervorrichtung geleitet wird, um Reaktionswärme daraus zu entfernen, und zur Reaktionszone zurückgeführt wird, während man die Temperatur des zurückgeführten Monomers oberhalb des Taupunktes der Mischung der Monomeren darin hält.

20. Verfahren nach Anspruch 19, in welchem man die Temperatur der Mischung der Monomeren mindestens 3 bis 10°C oberhalb des Taupunktes hält.

21. Verfahren nach Anspruch 20, in welchem die Polymere bei einer Produktivität von mindestens 1000 kg Polymer pro kg Gesamtkatalysator hergestellt werden.

22. Verfahren nach Anspruch 21, in welchem die Polymere bei einer Produktivität bis zu 2800 kg Polymer pro kg Katalysator hergestellt werden.

23. Verfahren nach Anspruch 7, das in einem WirbelbettReaktionsverfahren durchgeführt wird.

24. Verfahren nach Anspruch 23, das bei einer Massen-Gasströmungsgeschwindigkeit durch das im Verfahren verwendete Wirbelbett von 1,5 bis etwa 10 x $G_{mf}$ durchgeführt wird.

## Revendications

1. Polymère hydrocarboné à base d'éthylène, sous forme granulaire ou fluidisable, comprenant de l'éthylène, un monomère en $C_a$ et un monomère en $C_b$, ou le monomère en $C_a$ est le propylène ou le butène -

1 ou un mélange des deux et le monomère $C_b$ consiste en une ou plusieurs alpha mono-oléfines en $C_5$ à $C_8$ qui ne contiennent pas de ramification en deçà du quatrième atome de carbone, polymère dans lequel :

le rapport molaire $\dfrac{C_a}{C_2}$ va de 0,006 à 0,09 et le rapport molaire $\dfrac{C_b}{C_2}$ va de 0,003 à 0,07, et

le facteur ramification de chaîne va de 0,2 à 0,8,

ce polymère étant hétérogène et ayant une masse volumique de 910 à 940 kg/m³ ;

la teneur en matièresextractiblesau n-hexane à 50°C est inférieure à environ 5,5 % en poids,

l'indice de fluidité va de 0,5 à 5,0 dg/min,

le rapport $M_p/M_n$ va de 2,7 à 4,3,

le rapport écoulement-fluidité va de 22 à 36,

la densité apparente va de 224 à 497 kg/m³ (14 à 31 lb par ft³) et

le diamètre moyen des particules va de 0,127 à 1,78 mm (0,005 à 0,07 in).

2. Polymère suivant la revendication 1, dans lequel $C_a$ est le propylène.

3. Polymère suivant la revendication 1, dans lequel $C_a$ est le butène-1.

4. Polymère suivant l'une quelconque des revendications précédentes, dans lequel $C_b$ est l'hexène-1.

5. Polymère suivant l'une quelconque des revendications précédentes, ayant une masse volumique d'environ 920 kg/m³ et une résistance au déchirement d'Elmendorf sous la forme d'un film moulé par compression, de 39 à 315 kg/cm.

6. Film moulé à partir d'un polymère suivant l'une quelconque des revendications précédentes.

7. Procédé continu de production, en phase gazeuse et à un taux de productivité d'au moins 700 kg de polymère par kg de catalyseur total, de polymères hydrocarbonés hétérogènes à base d'éthylène ayant, sous la forme d'un film moulé par compression, des valeurs de résistance au déchirement d'Elmendorf de 39 à 315 kg/cm, qui consiste à interpolymériser de l'éthylène avec des monomères $C_a$ et $C_b$ maintenus pendant toute la durée du procédé dans les rapports molaires en phase gazeuse $\dfrac{C_a}{C_2}$ de 0,1 à 0,9 et $\dfrac{C_b}{C_2}$ de 0,015 à 0,2, le monomère $C_a$ étant le propylène ou le butène-1 ou un mélange des deux et le monomère $C_b$ étant une ou plusieurs alpha mono-oléfines en $C_5$ à $C_8$ qui ne contiennent pas de ramification en deçà du quatrième atome de carbone,

dans une zone de réaction sous une pression de 345 à 6897 kPa/m² à une température de 65 à 105°C, avec un catalyseur activé formé à partir du composé activateur et d'un composé précurseur,

ledit composé activateur répondant à la formule :

$$Al(R'')_cX'_dH_e$$

dans laquelle X' représente Cl ou OR''', R'' et R''' étant identiques ou différents et représentant des radicaux d'hydrocarbures saturés en $C_1$ à $C_{14}$, d a une valeur de 0 à 1,5, e est égal à 0 ou 1 et la somme c+d+e est égale à 3, ledit composé précurseur répondant à la formule générale :

$$Mg_mTi_1(OR)_nX_p\,(ED)_q$$

où ED désigne un composé donneur d'électrons qui est un composé organique liquide à 25°C à la pression atmosphérique, et dans lequel le composé de titane et le composé de magnésium utilisés pour former ledit composé précurseur sont solubles,

m va d'une valeur supérieure ou égale à 0,5 à une valeur inférieure ou égale à 56,

n est égal à 0, 1 ou 2,

p va d'une valeur supérieureou égale à 2 à une valeur inférieur ou égale à 116,

q va d'une valeur supérieur ou égale à 2 à une valeur inférieure ou égale à 85,

R est un radical d'hydrocarbure aliphatique ou aromatique en $C_1$ à $C_{14}$ ou un groupe COR' dans lequel R' est un radical d'hydrocarbure aliphatique ou aromatique en $C_1$ à $C_{14}$,

X représente Cl, Br, I ou leurs mélanges, et

ledit composé précurseur est imprégné dans une matière de support poreuse de manière qu'il y ait un rapport en poids de 0,033 à 0,33 partie de composé précurseur par partie de ladite matière de support, ledit composé précurseur étant activé par son traitement, à l'état imprégné, à l'extérieur du réacteur de polymérisation dans une suspension hydrocarbonée avec une quantité allant de plus de O à moins de 10 moles de composé activateur par mole de composé de titane dans ledit composé précurseur, séchage du mélange pour obtenir une matière en particules solides s'écoulant librement, et introduction du composé précurseur imprégné dans le réacteur de polymérisation où son activation est poursuivie par addition d'un supplément de composé activateur dans le réacteur en quantités choisies de manière qu'il y ait au total 10 ou plus de 10 moles à 400 ou moins de 400 moles dudit composé activateur par mole du composé de titane dans ledit composé précurseur.

8. Procédé suivant la revendication 7, dans lequel $C_a$ est le propylène.

9. Procédé suivant la revendication 7, dans lequel $C_a$ est le butène-1.

10. Procédé suivant l'une quelconque des revendications 7 à 9, dans lequel $C_b$ est l'hexène-1.

11. Procédé suivant la revendication 7, dans lequel ladite matière de support est un oxyde de silicium ou d'aluminium, ou leur mélange.

12. Procédé suivant la revendication 11, dans lequel ladite matière de support est la silice.

13. Procédé suivant la revendication 7, dans lequel m va d'une valeur supérieure ou égale à 1,5 à une valeur inférieure ou égale à 5, n est égal à 0, p va d'une valeur supérieure ou égale à 6 à une valeur inférieure ou égale à 14 et q va d'une valeur supérieure ou égale à 4 à une valeur inférieure ou égale à 11.

14. Procédé suivant la revendication 13, dans lequel X représente Cl.

15. Procédé suivant la revendication 14, dans lequel ledit donneur d'électrons est un ester alkylique d'un acide carboxylique aliphatique ou aromatique, un éther aliphatique, un éther cyclique ou une cétone aliphatique.

16. Procédé suivant la revendication 15, dans lequel ledit donneur d'électrons est le tétrahydrofuranne.

17. Procédé suivant la revendication 7, dans lequel ledit composé précurseur est activé à l'extérieur du réacteur de polymérisation avec 4 à 8 moles de composé activateur par mole de composé de titane dans ledit composé précurseur.

18. Procédé suivant la revendication 17, dans lequel ledit composé précurseur est encore activé dans ledit réacteur avec une quantité suffisante de composé activateur pour qu'il y ait 15 à 60 moles au total de composé activateur par mole de composé de titane dans ledit composé précurseur.

19. Procédé suivant la revendication 7, dans lequel le monomère n'ayant pas réagi est déchargé de ladite zone de réaction, amené à traverser un échangeur de chaleur extérieurement à ladite zone de réaction pour en dissiper la chaleur de réaction, et recyclé dans ladite zone de réaction cependant que la température du monomère recyclé est maintenue au-dessus du point de rosée du mélange de monomères qui s'y trouve.

20. Procédé suivant la revendication 19, dans lequel la température dudit mélange de monomères est maintenue au moins à 3-10°C au-dessus dudit point de rosée.

21. Procédé suivant la revendication 20, dans lequel lesdits polymères sont produits à un taux de productivité d'au moins 1000 kg de polymère par kg de catalyseur total.

22. Procédé suivant la revendication 21, dans lequel lesdits polymères sont préparés à un taux de productivité allant jusqu'à 2800 kg de polymère par kg de catalyseur.

23. Procédé suivant la revendication 7, qui est mis en oeuvre selon un processus réactionnel en lit fluide.

24. Procédé suivant la revendication 23, qui est mis en oeuvre à une vitesse massique d'écoulement du gaz à travers le lit fluidisé utilisé dans ledit procédé de 1,5 à environ 10 fois $G_{mf}$.

EP 0 021 605 B2

21